# EUROPÄISCHE PATENTSCHRIFT

(11) **EP 1 522 382 B1**
(45) Veröffentlichungstag und Bekanntmachung des Hinweises auf die Patenterteilung: **28.02.2007**
(21) Anmeldenummer: 04020223.6
(22) Anmeldetag: 26.08.2004
(51) Int. Cl.: B23Q 11/10, B23Q 11/00

(54) **Vorrichtung zum Zuführen eines Kühlschmierstoffstroms beim spanabhebenden Bearbeiten von Werkstücken**
Device for the delivery of cooling/lubricating fluid during a cutting operation at workpieces
Dispositif d'alimentation d'un fluide de lubrification et refroidissement pendant une opération de découpe sur des pièces

(30) Priorität: 08.10.2003 DE 10346726
(43) Veröffentlichungstag der Anmeldung: 13.04.2005
(73) Patentinhaber: KARL-HEINZ ARNOLD GmbH, 73760 Ostfildern (DE)
(72) Erfinder: Arnold, Klaus Michael, 73760 Ostfildern (DE); Braun, Harald, 73773 Aichwald (DE)
(74) Vertreter: Reimold, Otto

(56) Entgegenhaltungen:
- EP-A- 0 219 376
- EP-A- 1 080 811
- US-A- 3 795 454
- US-A- 4 778 315

## Beschreibung

Die Erfindung betrifft eine Vorrichtung zum Zuführen eines Kühlschmierstoffstroms beim spanabhebenden Bearbeiten von Werkstücken mittels eines von einem Werkzeughalter gehaltenen Werkzeugs zur Bearbeitungsstelle, wobei der Werkzeughalter eine Kühlschmierstoff-Kanalanordnung enthält und der Kühlschmierstoffstrom aus einer Austrittsmündung zur Bearbeitungsstelle hin austritt, wobei die Austrittsmündung an einer am Werkzeughalter oder an einem am Werkzeughalter befestigten Adapterstück schwenkbeweglich gelagerten Zuführdüse zugeordnet ist, die einen Zuführkanal aufweist, der im befestigtem Zustand der Zuführdüse mit der Kanalanordnung des Werkzeughalters oder mit einem Kühlschmierstoffkanal des Adapterstücks verbunden ist.

Bei der spanabhebenden Bearbeitung von Werkstücken ist es wichtig, für ausreichende Schmierung, Kühlung und für einen ausreichenden Späneabtransport zu sorgen. Diese Aufgaben werden vom Kühlschmierstoff übernommen, der bei der Bearbeitung der Werkstücke zur jeweiligen Bearbeitungsstelle geführt wird. Bei spanabhebenden Bearbeitungsverfahren, beispielsweise beim Drehen oder Fräsen, ist es bekannt, den Kühlschmierstoff über den Werkzeughalter zuzuführen und an diesem eine Austrittsmündung vorzusehen, aus der der Kühlschmierstoff in Form eines Strahles in Richtung zur Bearbeitungsstelle gespritzt wird. Bei speziellen spanabhebenden Verfahren, beispielsweise beim Abstechdrehen ist es auf Grund der tief ins Werkstückmaterial eindringenden Werkzeugschneide möglich, dass das Werkstück den Kühlschmierstoffstrahl abschattet, also im Strahlgang zwischen Austrittsmündung und Bearbeitungsstelle liegt, so dass dieser nicht in voller Stärke oder gar nicht zur Bearbeitungsstelle gelangt. Dies hat zur Folge, dass die Bearbeitungsstelle nicht richtig geschmiert und gekühlt wird und dass die produzierten Späne nicht zuverlässig abtransportiert werden. Dadurch kann die Qualität des herzustellenden Werkstückes leiden.

In der US-A-3795454 ist ein Halter für einen Drehmeißel oder dergleichen offenbart, wobei eine Düse zur Zufuhr von Kühlschmierstoff an die Bearbeitungsstelle vorgesehen ist. Wie insbesondere in den Figuren 5 bis 8 dieser Druckschrift gezeigt, kann die Düse in den Kopf des Werkzeughalters eingeschraubt werden, wobei die Düse im Innern einen Kanal besitzt, der eine Verlängerung des im Kopf des Werkzeughalters vorgesehenen Schmierstoffkanals darstellt. Der Kühlschmierstoff tritt dann an einer Düsenöffnung am Umfang der Düse aus. Die Position der Düse kann relativ zur Bearbeitungsstelle verändert werden und zwar dadurch, dass die Düse mehr oder weniger weit in den Kopf des Werkzeughalters eingeschraubt wird.

In der US-A-4778315 ist eine Vorrichtung zur Abfuhr von Spänen offenbart, die mehrere schlauchartige Düseneinrichtungen aufweist, die jeweils aus mehreren Einzelelementen aufgebaut ist, die wiederum jeweils über ein Drehgelenk mit dem vor- oder nachgeordneten Einzelelement verbunden sind, wobei am Ende der Düseneinrichtung eine Düse vorgesehen ist, aus der Luft oder Kühlschmierstoff austritt. Durch die Drehgelenke kann die Austrittsöffnung am Ende der Düse in beliebige Ausrichtungen zur Bearbeitungsstelle gebracht werden.

Aufgabe der Erfindung ist es, eine Vorrichtung zum Zuführen von Kühlschmierstoff beim spanabhebenden Bearbeiten von Werkstücken der eingangs erwähnten Art zu schaffen, die eine zuverlässige Beaufschlagung der Bearbeitungsstelle mit Kühlschmierstoff gewährleistet.

Diese Aufgabe wird durch eine Vorrichtung zum Zuführen eines Kühlschmierstoffstroms beim spanabhebenden Bearbeiten von Werkstücken mit den Merkmalen des unabhängigen Anspruchs 1 gelöst. Weiterbildungen der Erfindung sind in den Unteransprüchen dargestellt.

Die erfindungsgemäße Vorrichtung zeichnet sich dadurch aus, dass die Zuführdüse quer zur Zustellrichtung des Werkzeugs verschieblich im Werkzeughalter oder im Adapterstück gelagert ist.

Die Austrittsmündung kann also je nach Lage der vom Werkzeug und zu bearbeitendem Werkstück gebildeten Bearbeitungsstelle, die von der Werkzeugform und der Werkzeuggröße sowie vom Zustellweg des Werkzeugs abhängt, zur Bearbeitungsstelle ausgerichtet werden, so dass der Kühlschmierstoff bzw. Kühlmittelstrom zielgerichtet und in voller Stärke auf die Bearbeitungsstelle trifft. Es ist also für eine ausreichende Spanabfuhr, Schmierung und Kühlung der Bearbeitungsstelle gesorgt. Darüber hinaus lässt sich der Verbrauch an Kühlschmierstoff gegenüber herkömmlichen Vorrichtungen verringern, da mittels der erfindungsgemäßen Vorrichtung ein zielgenaues Ausrichten möglich ist und nicht eine teilweise Abschattung des Kühlmittelstroms, beispielsweise durch eine Erhöhung der Zuführmenmenge, insbesondere in Form einer Vergrößerung des Kühlschmierstoffstrahlquerschnitts, kompensiert wird. Mittels des Adapterstücks ist es möglich, herkömmliche Werkzeughalter, die eine stationäre Austrittsmündung bzw. -öffnung besitzen, nachzurüsten.

Bei einer Weiterbildung der Erfindung ist die Austrittsmündung in Draufsicht auf den Werkzeughalter auf die Zustellrichtung des Werkzeugs fluchtend mit der Bearbeitungsstelle ausrichtbar. Bearbeitungsstelle und Austrittsmündung können also auf einer Linie liegen, die rechtwinklig zur Werkzeuglängsachse des zu bearbeitenden Werkstücks verläuft. Es ist also möglich, sowohl die Position als auch die Ausrichtung bzw. Winkellage der Austrittsmündung bezüglich der Bearbeitungsstelle zu verändern, sodass die Austrittsmündung vorzugsweise vom Werkzeug aus gesehen hinter und oberhalb der Bearbeitungsstelle angeordnet ist. Bei der Zustellrichtung handelt es sich vorzugsweise um die Richtung, in der das Werkzeug an das zu bearbeitende Werkstück zum Zwecke einer spanabhebenden Bearbeitung herangefahren wird, beispielsweise mittels eines Werkzeugschlittens. Die zustellrichtung kann parallel zu einer Längsachse des Werkzeughalters verlaufen.

Die Austrittsmündung ist an einer am Werkzeughalter oder am Adapterstück quer zur Zustellrichtung des Werkzeugs verschieblich und/oder schwenkbeweglich gelagerten Zuführdüse angeordnet, wobei die Zuführdüse einen Zuführkanal aufweist, der im befestigten Zustand der Zuführdüse mit der Kanalanordnung des Werkzeughalters oder mit dem Kühlschmierstoffkanal des Adapterstücks verbunden ist. Die Zuführdüse ist also quer zur Zustellrichtung verschieblich gelagert, womit eine fluchtende Ausrichtung der Austrittsmündung zur Bearbeitungsstelle ermöglicht wird. Zusätzlich ist die Zuführdüse noch schwenkbeweglich gelagert, insbesondere um deren Düsenlängsachse, so dass jede beliebige Position der Bearbeitungsstelle in Zustellrichtung erreichbar ist. Besonders bevorzugt kann ein Schwenkbereich von über 90° abgeschwenkt werden.

Die Zuführdüse kann einen Düsenschaft und einen mit dem Düsenschaft gekoppelten Düsenkopf aufweisen. Der Düsenschaft kann quer zur Zustellrichtung verschieblich an einer Aufnahme des Werkzeughalters oder des Adapterstücks gelagert sein und der Düsenkopf kann die Austrittsmündung bzw. -öffnung aufweisen. Zum Zuführen des Kühlschmierstoffs kann der Düsenschaft einen Schaftkanalabschnitt und der Düsenkopf einen mit dem Schaftkanalabschnitt verbundenen Kopfkanalabschnitt des Zuführkanals der Zuführdüse aufweisen. Der Kühlschmierstoff gelangt also zunächst in den Schaftkanalabschnitt und von dort in den Kopfkanalabschnitt und tritt dann an der Austrittsmündung aus.

Der Schaftkanalabschnitt und der Kopfkanalabschnitt können im Winkel zueinander angeordnet sein, insbesondere im Winkel von ca. 90°, sodass die Zuführdüse als eine Art "winkeldüse" ausgebildet ist. Im befestigten Zustand der Zuführdüse kann der Schaftkanalabschnitt im Wesentlichen senkrecht zur Zustellrichtung und der Kopfkanalabschnitt im Wesentlichen parallel zur Zustellrichtung ausgerichtet sein. Der Kühlschmierstoff kann also zunächst parallel zur Zustellrichtung geführt und dann ca. 90° umgelenkt werden, sodass er in zustellrichtung gerichtet austreten kann.

Besonders bevorzugt sind der Düsenschaft und der Düsenkopf starr miteinander verbunden, so dass die Verschwenkbarkeit der Zuführdüse um ihre Düsenlängsachse durch eine schwenkbewegliche Lagerung des Düsenschaftes in der Aufnahme des Werkzeughalters oder des Adapterstücks erreicht ist. Alternativ dazu können Düsenschaft und Düsenkopf auch beweglich miteinander verbunden sein. Beispielsweise ist es möglich, dass der Düsenkopf um eine im Wesentlichen rechtwinklig zur Düsenlängsachse liegende Schwenkachse schwenkbar am Düsenschaft gelagert ist. Dadurch könnte der Düsenkopf also selbst verschwenkt werden und es wäre möglich, die Rotation bzw. Verschwenkung des Düsenschaftes um seine Längsachse mit der Verschwenkung des Düsenkopfes zu kombinieren.

Vorzugsweise ist der Düsenschaft zur schwenkbeweglichen Lagerung in der Aufnahme des werkzeughalters oder des Adapterstücks zylindrisch ausgebildet. Der Düsenschaft kann sich also frei in der Düsenaufnahme drehen. Alternativ ist es möglich, dass der Düsenschaft andere Querschnittsformen aufweist, beispielsweise eine rechteckige, quadratische oder ovale Querschnittsform. Der Düsenschaft kann dann zwar in der Aufnahme des Werkzeughalters oder des Adapterstücks quer zur Zustellrichtung verschoben, jedoch nicht um seine Düsenlängsachse verdreht werden, da auf Grund der Querschnittsform eine Verdrehsicherung vorliegt. Die Schwenkbeweglichkeit der Zuführdüse kann dann beispielsweise mittels einer um die Düsenlängsachse drehbare Lagerung des Düsenkopfs am Düsenschaft erreicht werden.

Bei einer weiterbildung der Erfindung ist der Düsenkopf gegenüber dem Düsenschaft querschnittsvergrößert. Der über den Schaftquerschnitt hinausragende Abschnitt des Düsenkopfes kann eine Anschlagfläche zum Anschlagen an ein am Werkzeughalter oder am Adapterstück ausgebildeten Gegenanschlag beim Verschieben der Zuführdüse in eine Verschieberichtung bilden. Es ist also möglich, die gesamte Zuführdüse soweit zu verschieben, bis die Anschlagfläche des Düsenkopfs an den Gegenanschlag anschlägt, so dass ein weiteres Verschieben in diese Verschiebrichtung nicht mehr möglich ist. Der Gegenanschlag am Adapterstück oder am Werkzeughalter kann dann derart positioniert sein, dass beim Anschlag der Anschlagfläche an den Gegenanschlag eine im Wesentlichen fluchtende Ausrichtung von Austrittsmündung und Bearbeitungsstelle erreicht wird.

Es ist möglich, den Düsenkopf plattenartig mit einem kreissegmentartigen Querschnitt auszubilden, wobei sich die Austrittsmündung an einer kreisbogenartigen Stirnfläche des Düsenkopfes befinden kann. Die beidseits der Stirnfläche angrenzenden Schenkelflächen können zudem als Schwenkanschläge dienen und somit den maximalen Schwenkbereich der Zuführdüse vorgeben. Es sind jedoch auch andere Querschnittsformen für den Düsenkopf möglich.

Es kann ein Fixierelement zum Festlegen einer bestimmten Position der Austrittsmündung in Bezug auf die Bearbeitungsstelle vorgesehen sein. Dadurch ist es möglich, eine bestimmte Verschiebeposition und eine bestimmte Schwenkstellung festzulegen. Vorzugsweise ist das Fixierelement in seiner fixierenden Festlegeposition in Kontakt mit dem Düsenschaft der Zuführdüse und verhindert ein Verschieben und ein Verschwenken der Zuführdüse. Ist also eine genaue Ausrichtung von Bearbeitungsstelle und Austrittsmündung erreicht, kann diese durch das Festlegen des Fixierelementes gesichert werden, sodass während des Bearbeitungsvorgangs keine Positions- oder Winkelveränderungen mehr auftreten können. Als Fixierelement kann beispielsweise wenigstens eine Schraube vorgesehen sein, die in ihrer fixierenden Festlegeposition auf den Düsenschaft der Zuführdüse geschraubt ist. Es sind jedoch auch andere Arten von Fixierelementen einsetzbar, beispielsweise eine Klemm- oder Rastvorrichtung.

Bevorzugte Ausführungsbeispiele der Erfindung sind in den Zeichnungen dargestellt und werden im Folgenden näher erläutert. Die Zeichnungen zeigen:
- Figur 1: eine perspektivische Darstellung eines ersten Ausführungsbeispiels der erfindungsgemäßen Vorrichtung, die in einen Werkzeughalter integriert ist,
- Figur 2: eine Draufsicht auf den Werkzeughalter und die Vorrichtung, wobei die Kanalanordnung des Werkzeughalters dargestellt ist,
- Figur 3a: eine Seitenansicht einer Zuführdüse,
- Figur 3b: eine Längsdarstellung der in Figur 3a dargestellten Zuführdüse,
- Figur 4a: eine Seitenansicht auf ein Adapterstück gemäß einem zweiten Ausführungsbeispiel der erfindungsgemäßen Vorrichtung und
- Figur 4b: eine Draufsicht auf das Adapterstück gemäß Figur 4a.

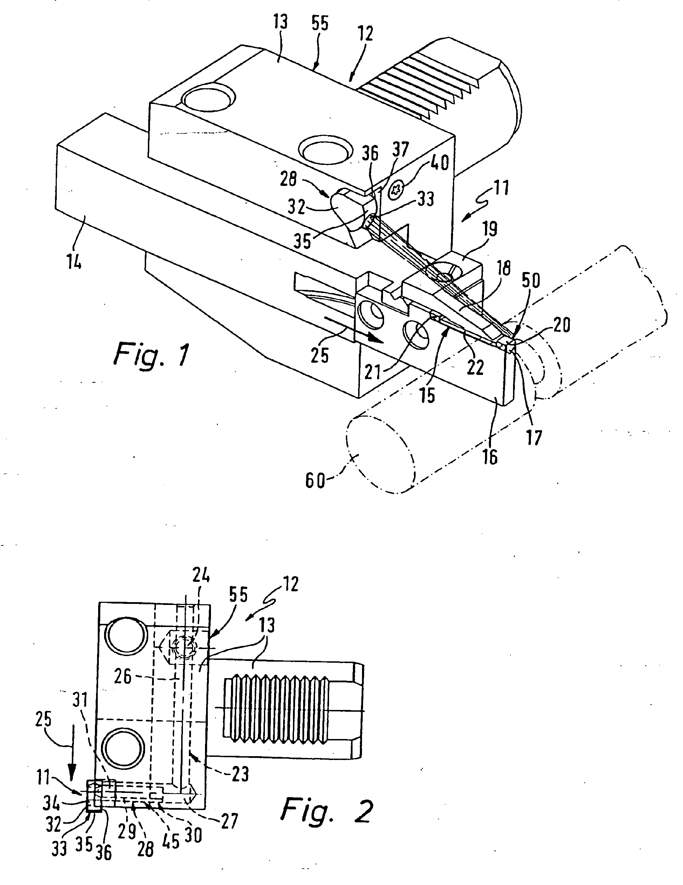

Figur 1 zeigt ein erstes Ausführungsbeispiel der erfindungsgemäßen Vorrichtung 11 zum Zuführen eines Kühlschmierstoffstromes beim spanabhebenden Bearbeiten von Werkstücken 60, wobei die Vorrichtung 11 in einen Werkzeughalter 12 integriert ist.

Der Werkzeughalter 12 besitzt ein Werkzeughalter-Basisteil 13, das an einer Werkzeugaufnahme einer Werkzeugmaschine, beispielsweise an einem als Revolverkopf ausgebildeten Werkzeugwechsler einer Drehmaschine, befestigt wird. Das Werkzeughalter-Basisteil 13 besitzt eine Aufnahme, in der ein stabähnliches Halterteil 14 verschieblich gelagert ist, das an seinem freien Ende eine aus Metall, insbesondere aus Hartmetall bestehende Schneidplatte 15 zur Bearbeitung des jeweiligen Werkstücks trägt. Der hier beispielhaft dargestellte Werkzeughalter 12 ist einem Werkzeughalter gemäß DIN 69880 ähnlich oder mit diesem identisch. Es sind jedoch auch andere Arten von Werkzeughaltern 12 einsetzbar, beispielsweise sogenannte ABS- oder HSK-Werkzeughalter oder Werkzeughalter gemäß DIN 1835.

Zum lösbaren Fixieren der Schneidplatte 15 am Werkzeughalter 12 dient einerseits eine untere Unterstützplatte 16, die seitlich an dem Werkzeughalter 12 angeschraubt ist und über dessen Vorderseite vorsteht. Die Unterstützplatte 16 weist an ihrer Oberseite eine prismatische, im Querschnitt dreieckige Längsnut 17 auf, in die die Schneidplatte 15 mit ihrer komplementär ausgebildeten Unterseite einsitzt. Dabei steht die Unterstützplatte 16 vorne und seitlich nicht über die Schneidplatte 15 vor, so dass die Unterstützplatte 16 die Werkstückbearbeitung nicht behindert. Die Schneidplatte 15 wird andererseits von einem oberen Klemmstück 18 gehalten, das von einem auf dem Werkzeughalter 12 aufgeschraubten Spannstück 19 in Längsrichtung der Schneidplatte 15 vorsteht und diese gegen die Unterstützplatte 16 presst. Auch das Klemmstück 18 steht seitlich nicht über die Schneidplatte 15 vor. Bei der beispielhaft dargestellten Schneidplatte 15 handelt es sich um eine Wendeschneidplatte länglicher Gestalt mit einem Schneidkopf 20 bzw. 21 an jedem Ende, wobei die beiden Schneidköpfe 20 und 21 identisch ausgebildet sind. Die Schneidplatte 15 kann somit in zwei umgekehrten Lagen verwendet werden, wobei jeweils der vorne liegende Schneidkopf 20 wirksam ist. Die beiden Schneidköpfe 20, 21 sind über eine Festspannpartie 22 der Schneidplatte 15 miteinander verbunden, deren Oberseite mit Bezug auf die Schneidkopfoberseite nach unten versetzt ist und auf der das Klemmstück 18 aufliegt.

Wie in Figur 2 dargestellt, ist im Werkzeughalter-Basisteil 13 eine Kühlschmierstoff-Kanalanordnung 23 integriert, die zum Zuführen von Kühlschmierstoff, beispielsweise einem nicht-wassermischbaren Öl dient. Bei der in Figur 2 beispielhaft dargestellten Kanalführung tritt der Kühlschmierstoff an der Rückseite 55 im unteren Bereich des Werkzeughalter-Basisteils 13 in die Kühlschmierstoff-Kanalanordnung 23 ein. Von dort gelangt er über eine vertikale Kanalsektion 24 in den oberen Bereich des Werkzeughalter-Basisteils 13 und von dort über eine parallel zur Zustellrichtung 25 der Schneidplatte 15 ausgerichtete Kanalsektion 26 in eine im Wesentlichen senkrecht zur Zustellrichtung 25 ausgerichtete Kanalsektion 27. Die Zustellrichtung 25 verläuft, wie in Figur 1 dargestellt, längs der Längsachse des stabähnlichen Halterteils 14 des Werkzeughalters 12.

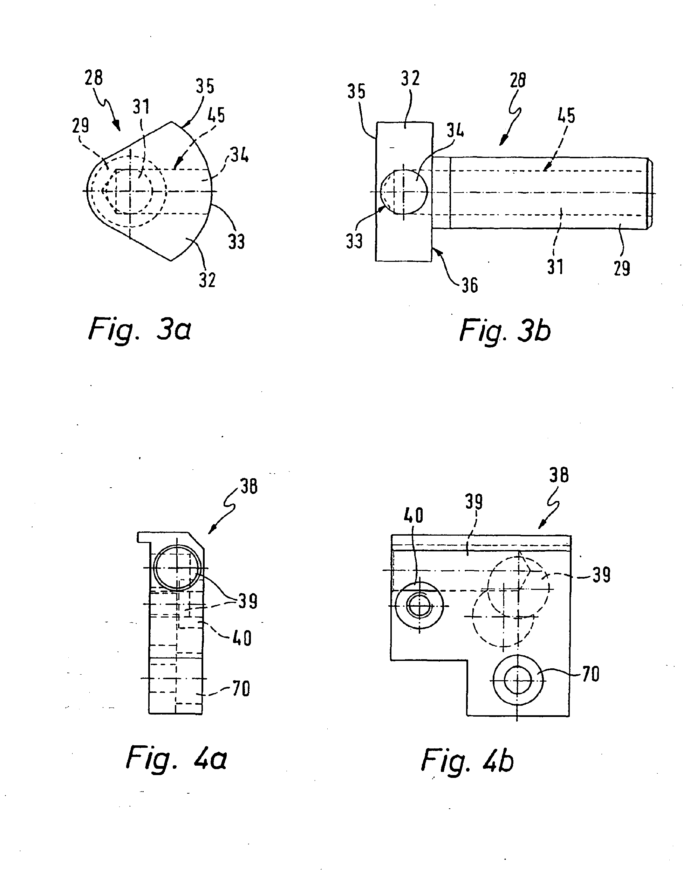

Die Vorrichtung 11 zum Zuführen eines Kühlschmierstoffstroms befindet sich am Werkzeughalter-Basisteil 13 des Werkzeughalters 12. Sie umfasst eine Zuführdüse 28, die in den Figuren 3a und 3b gesondert dargestellt ist. Die Zuführdüse besitzt einen Düsenschaft 29, der im Wesentlichen senkrecht zur Zustellrichtung 25 verschieblich an einer Aufnahme 30 am Werkzeughalter-Basisteil 13 beispielsweise in der Kanalsektion 27 gelagert ist. Der Düsenschaft 29 besitzt einen Schaftkanalabschnitt 31, der in befestigtem Zustand der Zuführdüse 28 mit der senkrechten Kanalsektion 27 der Kühlschmierstoff-Kanalanordnung 23 verbunden ist. Der Düsenschaft 29 ist starr mit einem Düsenkopf 32 verbunden, an dem sich die Austrittsmündung 33 für den Kühlschmierstoff befindet. Der Düsenkopf 32 besitzt einen Kopfkanalabschnitt 34, der senkrecht zum Schaftkanalabschnitt 31 des Düsenschaftes 29 ausgerichtet ist, sodass die Zuführdüse 28 auch als "Winkeldüse" bezeichnet werden kann. Im befestigten Zustand der Zuführdüse 28 ist der Schaftkanalabschnitt 31 also senkrecht zur Zustellrichtung 25 ausgerichtet, während der Kopfkanalabschnitt 34 parallel zur Zustellrichtung 25 verläuft. Der Düsenkopf 32 ist plattenartig ausgebildet und besitzt einen kreissegmentartigen Querschnitt, wobei sich die Austrittsmündung 33 an einer kreisbogenartigen Stirnfläche 35 des Düsenkopfes 32 befindet. Der über den zylindrischen Schaftquerschnitt hinausragende Abschnitt des Düsenkopfes 32 bildet eine Anschlagfläche 36 zum Anschlagen an einen am Werkzeughalter-Basisteil 13 ausgebildeten Gegenanschlag 37, sodass der Verschiebeweg der Zuführdüse 28 in eine Richtung begrenzt ist.

Der Kühlschmierstoff gelangt also von der senkrecht zur Zustellrichtung 25 ausgerichteten Kanalsektion 27 der Kühlschmierstoff-Kanalanordnung 23 im Werkzeughalter-Basisteil 13 in den Schaftkanalabschnitt 31 des Düsenschaftes 29 und von dort nach einer ca. 90°-Umlenkung in den Kopfkanalabschnitt 34 des Düsenkopfes 32 und schließlich zur Austrittmündung 33, von wo er in Form eines Kühlschmierstoffstrahles zur Bearbeitungsstelle 50 zwischen der Schneidplatte 15 und dem zu bearbeitenden Werkstück 60 gestrahlt wird. Dort sorgt der Kühlschmierstoff für Schmierung und Kühlung der Bearbeitungsstelle 50 und für ausreichende Späneabfuhr.

Die Position der Bearbeitungsstelle 50 bezüglich des Werkzeughalters 12, insbesondere bezüglich des Werkzeughalter-Basisteils 13 kann je nach Bearbeitungsvorgang variieren. Wichtige Faktoren sind dabei die Form und die Größe der Schneidplatte 15 aber auch beispielsweise wie weit das stabähnliche Halterteil 14 in Bezug auf das Werkzeughalter-Basisteil 13 verschoben ist. Diese Positionsveränderung der Bearbeitungsstelle 50 kann durch die Schwenkbeweglichkeit und Querverschieblichkeit der Zuführdüse 28 ausgeglichen werden. Eine Abstandsänderung zwischen der Bearbeitungsstelle 50 und dem Werkzeughalter-Basisteil 13, beispielsweise durch ein Verschieben des stabähnlichen Halterteils 14 relativ gegenüber dem Werkzeughalter-Basisteil 13, kann durch ein Verschwenken der Zuführdüse 28 ausgeglichen werden. Eine Lageänderung der Bearbeitungsstelle 50 quer zur Zustellrichtung 25 kann über die Querverschieblichkeit der Zuführdüse 28 ausgeglichen werden. Ist eine gewünschte Verschieb- bzw. Schwenkposition erreicht, kann diese durch Fixierelemente 40 fixiert werden, beispielsweise in der Art, dass der Düsenschaft 29 der Zuführdüse 28 blockiert wird, so dass er nicht mehr in seiner Aufnahme 30 verdreht und verschoben werden kann. Als Fixierelement 40 kann beispielsweise eine Schraube eingesetzt werden, die auf den Düsenschaft 29 schraubbar ist.

Es ist das aus dem Stand der Technik bekannte Problem lösbar, dass bei speziellen spanabhebenden Bearbeitungsvorgängen, beispielsweise einem Einstech- oder Abstechdrehen, die Bearbeitungsstelle 50 durch das zu bearbeitende Werkstück abgeschattet wird, wodurch ein stationär ausgerichteter Kühlschmierstoffstrahl nicht in voller Stärke oder gar nicht zur Bearbeitungsstelle 50 gelangt. Durch die Vorrichtung 11 ist es möglich, die Austrittsmündung 33 vom zu bearbeitenden Werkzeug aus gesehen fluchtend hinter der Bearbeitungsstelle 50 anzuordnen, so dass auch bei diesen ansonsten schwer zu erreichenden Bearbeitungsstellen 50 eine zielgenaue Zufuhr von Kühlschmierstoff ermöglicht ist.

In den Figuren 4a und 4b ist ein zweites Ausführungsbeispiel der erfindungsgemäßen Vorrichtung 11 dargestellt. Die Vorrichtung 11 umfasst dabei ein Adapterstück 38, das zur Aufnahme der Zuführdüse 28 dient und mittel Befestigungsmitteln 70, beispielsweise Schrauben am Werkzeughalter 12, insbesondere an dessen Werkzeughalter-Basisteil 13, befestigt werden kann. Dadurch ist es möglich, herkömmliche Werkzeughalter 12, die eine ortsfeste Austrittsmündung 33 besitzen, nachzurüsten. Das Adapterstück 38 besitzt einen Kühlschmierstoffkanal 39, der einenends mit der Kühlschmierstoff-Kanalanordnung 23 des Werkzeughalters 12 und andernends mit dem Schaftkanalabschnitt 31 der Zuführdüse 28 verbunden ist, sodass Kühlschmierstoff vom Werkzeughalter 12 über das Adapterstück 38 in die Zuführdüse 28 und von dort aus zur Bearbeitungsstelle 50 gelangen kann.

## Patentansprüche

1. Vorrichtung zum Zuführen eines Kühlschmierstoffstroms beim spanabhebenden Bearbeiten von Werkstücken (60) mittels eines von einem Werkzeughalter (12) gehaltenen Werkzeugs (15) zur Bearbeitungsstelle (50), wobei der Werkzeughalter (12) eine Kühlschmierstoff-Kanalanordnung (23) enthält und der Kühlschmierstoff aus einer Austrittsmündung (33) zur Bearbeitungsstelle (50) hin austritt, wobei die Austrittsmündung (33) an einer am Werkzeughalter (12) oder an einem am Werkzeughalter (12) befestigten Adapterstück (38) schwenkbeweglich gelagerten Zuführdüse (28) angeordnet ist, die einen Zuführkanal (45) aufweist, der im befestigtem Zustand der Zuführdüse (28) mit der Kanalanordnung (23) des Werkzeughalters (12) oder mit einem Kühlschmierstoffkanal (39) des Adapterstücks (38) verbunden ist, **dadurch gekennzeichnet, dass** die Zuführdüse (28) quer zur Zustellrichtung des Werkzeugs (15) verschieblich im Werkzeughalter (12) oder im Adapterstück (38) gelagert ist.

2. Vorrichtung nach Anspruch 1, **dadurch gekennzeichnet, dass** die Austrittsmündung (33) in Draufsicht auf den Werkzeughalter (12) auf die zustellrichtung (25) des Werkzeugs (15) fluchtend mit der Bearbeitungsstelle (50) ausrichtbar ist.

3. Vorrichtung nach Anspruch 1 oder 2, **dadurch gekennzeichnet, dass** die Zuführdüse (28) einen Düsenschaft (29) aufweist, der quer zur Zustellrichtung (25) verschieblich in einer Aufnahme (30) des Werkzeughalters (12) oder des Adapterstücks (38) gelagert ist und einen mit dem Düsenschaft (29) gekoppelten, die Austrittsmündung (33) aufweisenden Düsenkopf (32) aufweist, wobei der Düsenschaft (29) einen Schaftkanalabschnitt (31) und der Düsenkopf (32) einen mit dem Schaftkanalabschnitt (31) verbundenen Kopfkanalabschnitt (34) besitzt.

4. Vorrichtung nach Anspruch 3, **dadurch gekennzeichnet, dass** der Schaftkanalabschnitt (31) und der Kopfkanalabschnitt (34) im Winkel zueinander angeordnet sind, insbesondere im Winkel von ca. 90°.

5. Vorrichtung nach Anspruch 4, **dadurch gekennzeichnet, dass** im befestigten Zustand der Zuführdüse (28) der Schaftkanalabschnitt (31) im Wesentlichen senkrecht zur Zustellrichtung (25) und der Kopfkanalabschnitt (34) im Wesentlichen parallel zur Zustellrichtung (25) ausgerichtet ist.

6. Vorrichtung nach einem der Ansprüche 3 bis 5, **dadurch gekennzeichnet, dass** Düsenschaft (29) und Düsenkopf (32) starr miteinander verbunden sind und die Verschwenkbarkeit der Zuführdüse (28) um ihre Düsenlängsachse durch eine schwenkbewegliche Lagerung des Düsenschaftes (29) in der Aufnahme (30) des Werkzeughalters (12) oder des Adapterstücks (38) erreicht ist.

7. Vorrichtung nach Anspruch 6, **dadurch gekennzeichnet, dass** der Düsenschaft (29) zur schwenkbeweglichen Lagerung in der Aufnahme (30) zylindrisch ausgebildet ist.

8. Vorrichtung nach einem der Ansprüche 3 bis 7, **dadurch gekennzeichnet, dass** der Düsenkopf (32) gegenüber dem Düsenschaft (29) querschnittsvergrößert ist, wobei der über den Schaftquerschnitt hinausragende Abschnitt des Düsenkopfes (32) eine Anschlagfläche (36) zum Anschlagen an einem am Werkzeughalter (12) oder am Adapterstück (38) ausgebildeten Gegenanschlag (37) beim Verschieben der Zuführdüse (28) in eine Verschieberichtung bildet.

9. Vorrichtung nach einem der Ansprüche 3 bis 8, **dadurch gekennzeichnet, dass** der Düsenkopf (32) plattenartig mit einem kreissegmentartigen Querschnitt ausgebildet ist und sich die Austrittsmündung (33) an einer kreisbogenartig ausgebildeten Stirnfläche (35) des Düsenkopfs (32) befindet.

10. Vorrichtung nach einem der Ansprüche 3 bis 9, **dadurch gekennzeichnet, dass** ein Fixierelement (40) zum Festlegen einer bestimmten Position der Austrittsmündung(33) in Bezug auf die Bearbeitungsstelle (50) vorgesehen ist, wobei vorzugsweise das Fixierelement (40) derart ausgebildet ist, dass es in einer fixierenden Festlegeposition an den Düsenschaft (29) der Zuführdüse (28) angreift und das Verschieben und Verschwenken der Zuführdüse (28) verhindert.

## Claims

1. Device for supplying a cooling lubricant flow to the machining point (50) while machining workpieces (60) by means of a tool (15) held by a tool holder (12), wherein the tool holder (12) includes a cooling lubricant passage arrangement (23) and the cooling lubricant is discharged towards the machining point (50) from a delivery port (33), wherein the delivery port (33) is located on a supply nozzle (28) pivoted on the tool holder (12) or on an adapter piece (38) secured to the tool holder (12), said supply nozzle featuring a supply passage (45) connected to the passage arrangement (23) of the tool holder (12) or to a cooling lubricant passage (39) of the adapter piece (38) in the secured state of the supply nozzle (28), **characterised in that** the supply nozzle (28) is movably mounted in the tool holder (12) or in the adapter piece (38) at right angles to the feed direction of the tool (15).

2. Device according to claim 1, **characterised in that** the discharge port (33) can be aligned flush with the machining point (50) relative to the feed direction (25) of the tool (15) in a top view on the tool holder (12).

3. Device according to claim 1 or 2, **characterised in that** the supply nozzle (28) comprises a nozzle shaft (29), which is mounted for movement at right angles to the feed direction (25) in a location (30) of the tool holder (12) or the adapter piece (38) and features a nozzle head (32) coupled to the nozzle shaft (29) and provided with the discharge port (33), wherein the nozzle shaft (29) includes a shaft passage section (31) and the nozzle head (32) includes a head passage section (34) connected to the shaft passage section (31).

4. Device according to claim 3, **characterised in that** the shaft passage section (31) and the head passage section (34) are arranged at an angle relative to one another, in particular at an angle of approximately 90°.

5. Device according to claim 4, **characterised in that**, in the secured state of the supply nozzle (28), the shaft passage section (31) is aligned at essentially right angles to the feed direction (25) and the head passage section (34) is aligned essentially parallel to the feed direction (25).

6. Device according to any of claims 3 to 5, **characterised in that** the nozzle shaft (29) and the nozzle head (32) are rigidly joined to one another and the pivoting movement of the supply nozzle (28) about its longitudinal axis is made possible by the pivotable mounting of the nozzle shaft (29) in the location (30) of the tool holder (12) or the adapter piece (38).

7. Device according to claim 6, **characterised in that** the nozzle shaft is designed cylindrical for pivotable mounting in the location (30).

8. Device according to any of claims 3 to 7, **characterised in that** the nozzle head (32) has a larger cross-section than the nozzle shaft (29), the section of the nozzle head (32) projecting beyond the shaft cross-section forming a stop surface (36) for contact with a mating stop (37) provided on the tool holder (12) or on the adapter piece (38) while the supply nozzle (28) traverses in the traversing direction.

9. Device according to any of claims 3 to 8, **characterised in that** the nozzle head (32) is plate-like in design with a cross-section resembling a segment of a circle, and **in that** the discharge port (33) is located at an arcuate end face (35) of the nozzle head (32).

10. Device according to any of claims 3 to 9, **characterised in that** a fixing element (40) is provided for fixing a defined position of the discharge port (33) relative to the machining point (50), the fixing element (40) being preferably designed such that it acts on the nozzle shaft (29) of the supply nozzle (28) in a fixing position and prevents the displacement and pivoting of the supply nozzle (28).

## Revendications

1. Dispositif d'alimentation d'un fluide de lubrification et refroidissement pendant une opération de découpe sur des pièces (60) au moyen d'un outil (15) maintenu par un porte-outil (12) sur un poste d'usinage (50), le porte-outil (12) contenant un système de canalisation (23) pour fluide de lubrification et refroidissement et le fluide de lubrification et refroidissement sortant d'un orifice de sortie (33) au niveau du poste d'usinage (50), l'orifice de sortie (33) étant disposé sur une buse d'alimentation agencée de manière à pouvoir être pivotée sur un porte-outil (12) ou sur un raccord adaptateur (38) fixé sur un porte-outil (12), qui comprend un canal d'alimentation (45) qui est relié, à l'état rattaché de la buse d'alimentation (28), au système de canalisation (23) du porte-outil (12) ou à un canal de fluide de lubrification et refroidissement (39) du raccord d'adaptateur (38), **caractérisé en ce que** la buse d'alimentation (28) est agencée de manière transversale par rapport à la direction d'avancement de l'outil (15) et de manière mobile dans le porte-outil (12) ou dans le raccord adaptateur (38).

2. Dispositif selon la revendication 1, **caractérisé en ce que** l'orifice de sortie (33) peut être positionné, dans une vue en plan, sur le porte-outil (12) dans la direction d'avancement (25) de l'outil (15) en alignement avec le poste d'usinage (50).

3. Dispositif selon la revendication 1 ou 2, **caractérisé en ce que** la buse d'alimentation (28) comprend une tige de buse (29), qui est agencée de manière transversale par rapport à la direction d'avancement (25) et de manière mobile dans un logement (30) du porte-outil (12) ou du raccord d'adaptateur (38) et comprend une tête de buse (32) couplée à la tige de buse (29) et comprenant l'orifice de sortie (33), la tige de buse (29) possédant une section de canal de tige (31) et la tête de buse (32) possédant une section de canal de tête (34) reliée à la section de canal de tige (31).

4. Dispositif selon la revendication 3, **caractérisé en ce que** la section de canal de tige (31) et la section de canal de tête (34) sont disposées de manière angulaire l'une par rapport à l'autre, en particulier selon un angle d'environ 90°.

5. Dispositif selon la revendication 4, **caractérisé en ce que**, à l'état rattaché de la buse d'alimentation (28), la section de canal de tige est positionnée de manière essentiellement verticale par rapport à la direction d'avancement (25) et la section de canal de tête (34) est positionnée de manière essentiellement parallèle à la direction d'avancement (25).

6. Dispositif selon l'une des revendications 3 à 5, **caractérisé en ce que** la tige de buse (29) et la tête de buse (32) sont reliées l'une à l'autre de manière rigide et **en ce que** la capacité de pivotement de la buse d'alimentation (28) autour de son axe longitudinal de buse est obtenue via un agencement à pivotement de la tige de buse (29) dans le logement (30) du porte-outil (12) ou du raccord adaptateur (38).

7. Dispositif selon la revendication 6, **caractérisé en ce que** la tige de buse (29) est conçue de manière cylindrique pour un agencement de manière mobile dans le logement (30).

8. Dispositif selon l'une quelconque des revendications 3 à 7, **caractérisé en ce que** la tête de buse (32) est agrandie de manière transversale par rapport à la tige de buse (29), la section de la tête de buse (32) faisant saillie au-delà de la section transversale de tige formant une surface de butée (36) pour venir en butée contre une contre-butée (37) conçue sur un porte-outil (12) ou un raccord adaptateur (38) en déplaçant la buse d'alimentation (28) dans un sens de déplacement.

9. Dispositif selon l'une quelconque des revendications 3 à 8, **caractérisé en ce que** la tête de buse (32) est conçue de forme plate avec une coupe transversale de type segment de cercle et l'orifice de sortie (33) se trouve sur une surface frontale (35) de la tête de buse (32) formée en arc de cercle.

10. Dispositif selon l'une quelconque des revendications 3 à 9, **caractérisé en ce qu'**un élément de fixation (40) prévu pour déterminer une position donnée de l'orifice de sortie (33) en ce qui concerne le poste d'usinage (50), l'élément de fixation (40) étant conçu de préférence de telle manière qu'il s'engage dans une position de fixation fixant sur la tige de buse (29) de la buse d'alimentation (28) et empêche le déplacement et le pivotement de la buse d'alimentation (28).
